# EUROPEAN PATENT SPECIFICATION

(11) **EP 3 973 264 B1**
(45) Date of publication and mention of the grant of the patent: **04.09.2024**
(21) Application number: 20743237.8
(22) Date of filing: 21.05.2020
(51) Int. Cl.: G01M 17/02

(54) **TEST MACHINE FOR VEHICLE WHEEL**
PRÜFMASCHINE FÜR FAHRZEUGRAD
MACHINE D'ESSAI POUR ROUE DE VÉHICULE

(30) Priority: 23.05.2019 IT 201900007172
(43) Date of publication of application: 30.03.2022
(73) Proprietor: Test Industry S.r.l., 20121 Milano (IT)
(72) Inventor: SPEZZABALLI, Daniel, 20121 Milano (IT)
(74) Representative: De Lorenzo, Danilo
(86) International application number: PCT/IB2020/054822
(87) International publication number: WO 2020/234819

(56) References cited:
- GB-A- 1 392 033
- JP-A- S58 120 147
- US-A- 5 481 907
- US-B1- 7 140 242

## Description

The present invention relates to a testing machine for a vehicle wheel, such as for example a wheel of a light or heavy vehicle, for example a car or a truck or an agricultural vehicle.

Testing machines are known in the art, i.e. machines for simulating loads to which a vehicle suspension system is subjected totally or partially during normal or extreme use. This type of testing machine generally consists of a rotating drum on which the complete wheel of a vehicle (i.e. the rim and tire assembly) is positioned in contact. The wheel is then subjected to a series of dynamic stresses by the testing machine in one or more predefined cycles, so as to try to simulate the behavior of the wheel on the road. Examples of known testing machines are shown in documents GB1392033A, US7140242B1 and US5481907A.

In particular, the testing machines of the prior art are able to control and measure the forces and moments acting on the wheel, when the latter is subjected to the three typical movements of this type of machine, that is, a linear radial movement, an angular slip movement and an angular camber movement.

In order to carry out the movements described above, the testing machines of the prior art employ bulky and heavy structures. This is due to the need to ensure adequate support for the loads involved and to prevent unwanted vibrations from triggering.

Unfortunately, the bulky and heavy structures of the machines of the prior art involve high inertias which affect the accelerations, speeds and precision of the movements obtainable from the testing machine.

Furthermore, the bulky structures of the machines of the prior art require the use of actuators of great power, and therefore of high weight, bulk, as well as requiring high energy resources.

One of the objects of the present invention is to propose a testing machine for a vehicle wheel capable of overcoming the drawbacks of the prior art testing machines. In particular, one of the objects of the present invention is to provide a testing machine for a vehicle wheel which has reduced weight and dimensions and at the same time is able to more faithfully reproduce the dynamic features of the actual stresses to which a wheel is subject on a road or in extreme road conditions.

This object is achieved with a testing machine for a vehicle wheel according to the appended independent claim. The dependent claims describe preferred or advantageous embodiments of the testing machine for a vehicle wheel.

The features and the advantages of the testing machine for a vehicle wheel according to the invention shall be made readily apparent from the following description of preferred embodiments thereof, provided purely by way of a non-limiting example, with reference to the accompanying figures, in which:
figure 1 shows an overall view of the testing machine according to an embodiment of the present invention, with a wheel protection device in the open configuration;
figure 2 shows an overall view of the testing machine according to an embodiment of the present invention, with the wheel protection device in the closed configuration;

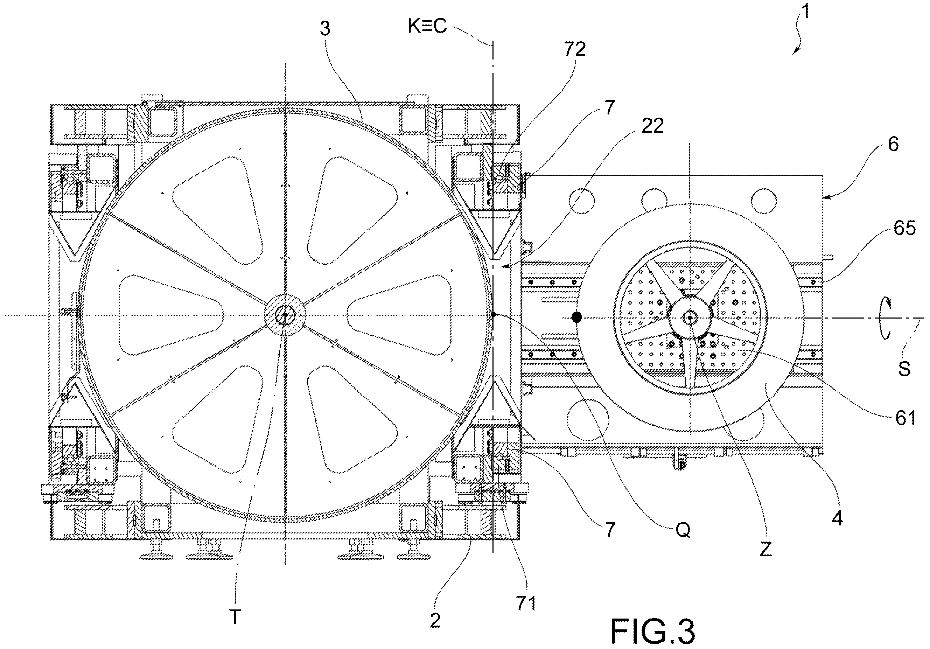

figure 3 shows a partial vertical sectional view of the testing machine along the plane AA of figure 2, in which the vehicle wheel is spaced apart from the rotating drum;

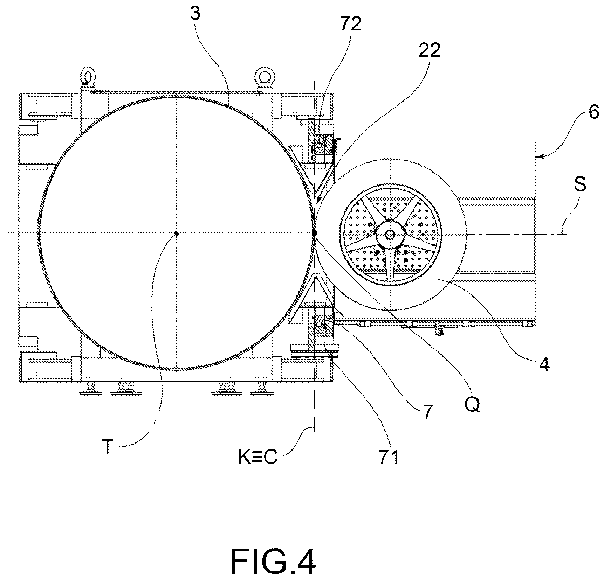

figure 4 shows a partial vertical sectional view of the testing machine along the plane AA of figure 2, in which the vehicle wheel is in contact with the rotating drum;

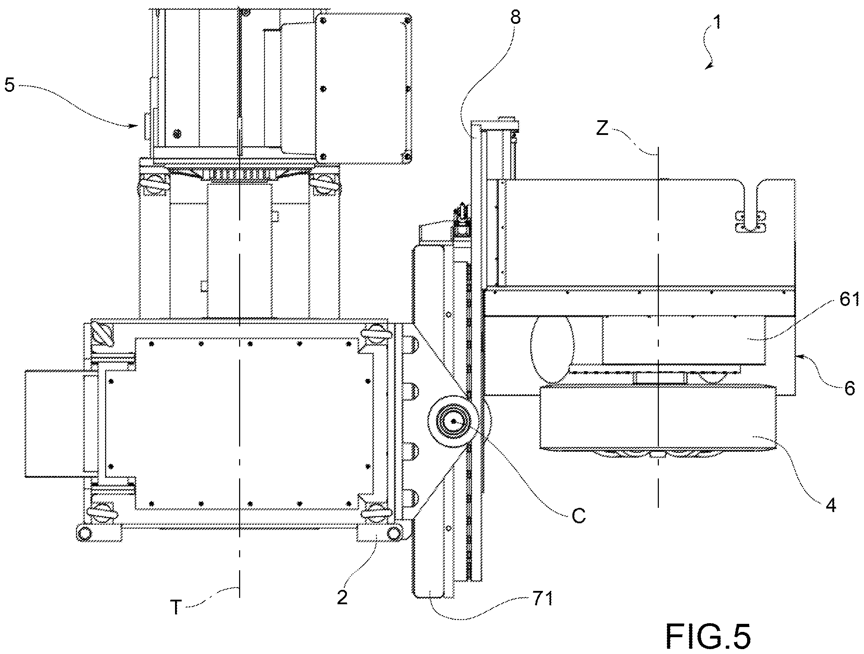

figure 5 shows a partial top plan view of the testing machine of figure 1;

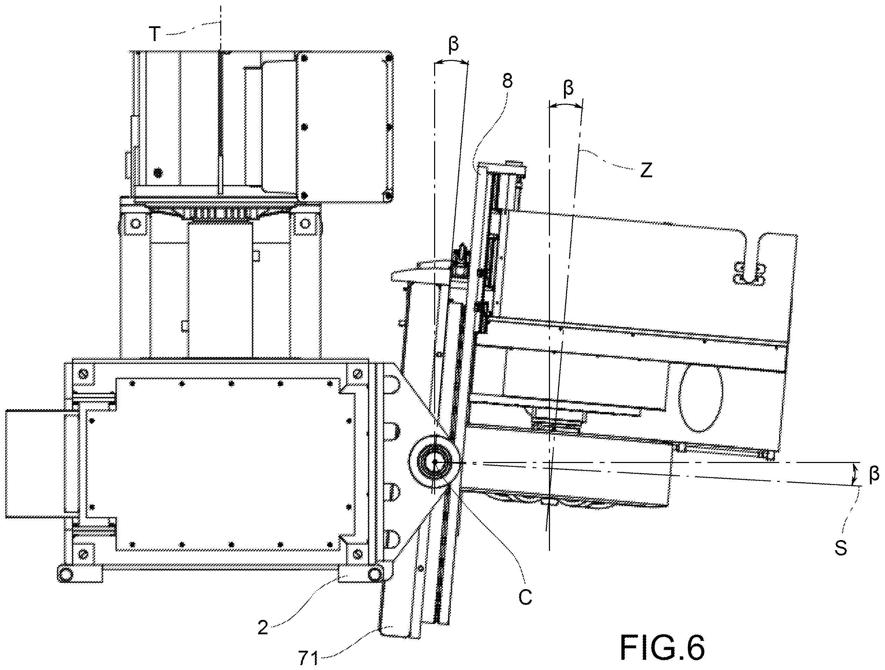

figure 6 shows a partial top plan view of the testing machine of figure 1, in which the vehicle wheel has undergone a rotation around the camber axis C by a camber angle β with respect to figure 5;

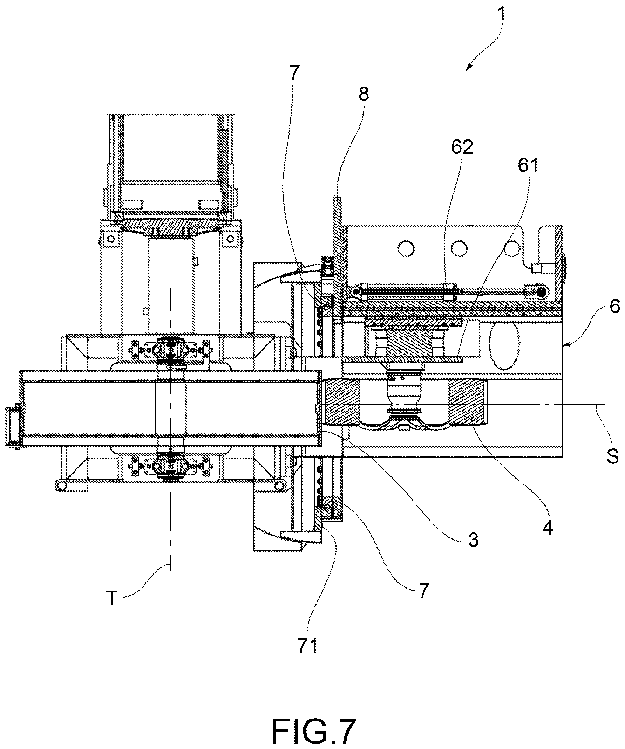

figure 7 shows a sectional view along a horizontal sectional plane of the testing machine of figure 2;

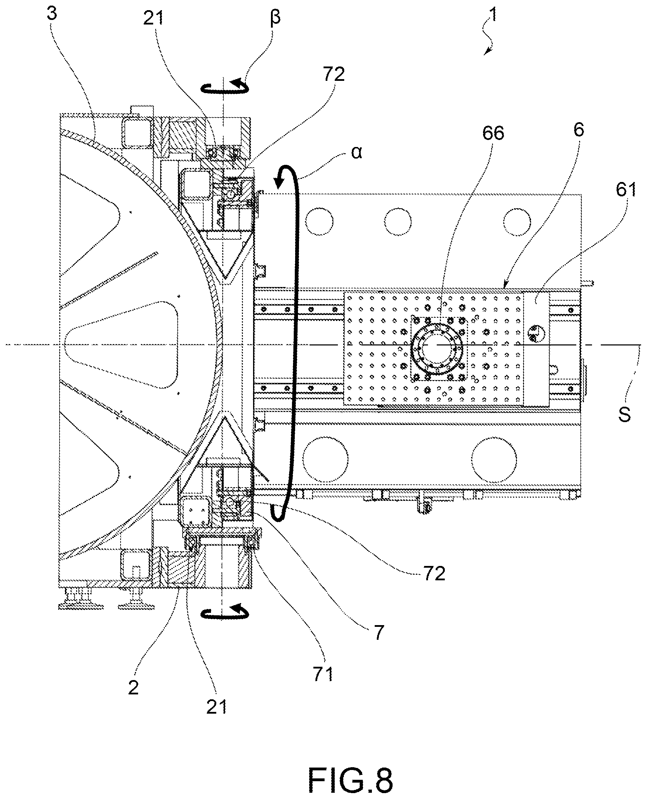

figure 8 shows a vertical sectional detail of the testing machine, in which the vehicle wheel has been removed;

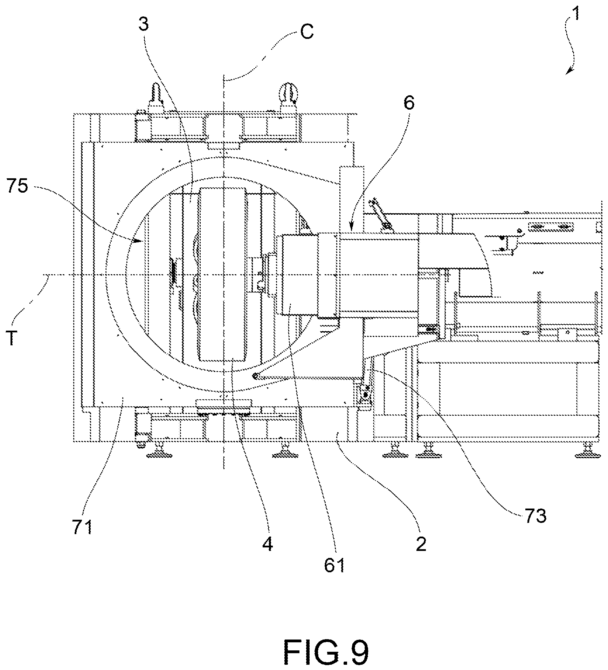

figure 9 shows a side elevation view of the testing machine of figure 1;

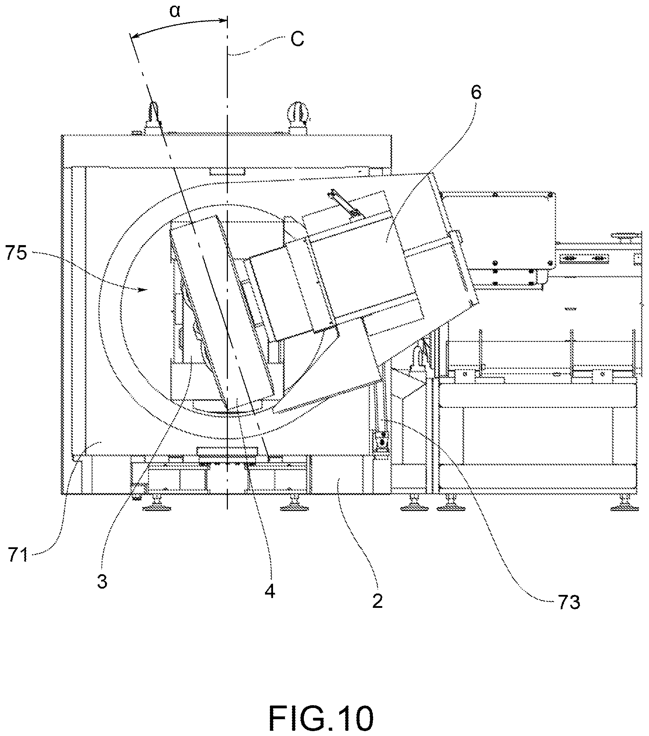

figure 10 shows a side elevation view of the testing machine of figure 1, in which the vehicle wheel has undergone a rotation around the slip rotation axis S by a lateral slip angle α with respect to figure 10.

With reference to the aforesaid figures, the reference numeral 1 generally indicates a testing machine 1 for a vehicle wheel 4. In particular, a testing machine 1 suitable for subjecting a vehicle wheel 4 to dynamic stresses, which simulate dynamic stresses under normal use of the wheel 4 on a vehicle.

The testing machine 1 comprises a base frame 2, suitable for resting on a support surface P, and a rotating drum 3 rotatably supported by the base frame 2 around a rotating drum axis T. The base frame 2 is for example a container suitable for containing the rotating drum 3. Preferably, the base frame 2 comprises an access window 22 to the rotating drum 3, so that the vehicle wheel 4 may come into contact with the rotating drum 3 through the access window 22.

The testing machine 1 further comprises rotating drum actuating means 5, for the rotation of the rotating drum 3 around the drum axis T, for example an electric or hydraulic motor.

Furthermore, the testing machine 1 comprises a wheel movement device 6, suitable for rotatably supporting the vehicle wheel 4 around a wheel axis Z. Moreover, the wheel movement device 6 is suitable for moving the vehicle wheel 4 from a position spaced from the rotating drum 3 to a position in contact with the rotating drum 3.

Preferably, the wheel movement device 6 is arranged in front of the access window 22 and protrudes from the base frame 2 in a horizontal direction X, parallel to the support surface P.

The wheel movement device 6 is rotatably supported by the base frame 2 around a slip rotation axis S, said slip rotation axis S being incident or perpendicular to a plane K tangent to the contact point Q between the vehicle wheel 4 and the rotating drum 3. In this way, following a rotation of the wheel movement device 6 around the slip rotation axis S, the vehicle wheel 4 is rotated according to a lateral slip angle α (or slip angle).

Moreover, the wheel movement device 6 is rotatably supported by the base frame 2 around a camber rotation axis C. The camber rotation axis C is perpendicular to the wheel axis Z and to the slip rotation axis S, so that following a rotation of the wheel movement device 6 around the camber rotation axis C, the vehicle wheel 4 is rotated according to a camber angle β.

According to a preferred embodiment, the slip rotation axis S and the camber rotation axis C are incident at the point of contact Q between the vehicle wheel 4 and the rotating drum 3.

The wheel movement device 6 comprises a carriage 61 suitable for rotatably supporting the vehicle wheel 4 around the wheel axis Z. The carriage 61 is movable along the horizontal direction X parallel to the slip rotation axis S, for example perpendicular to the wheel axis Z. Preferably, the carriage 61 is movable along a guide 65, arranged in the horizontal direction X.

In particular, the carriage 61 comprises a hub 66 on which it is possible to rotatably constrain the vehicle wheel 4, so that the vehicle wheel 4 may turn idly.

According to the invention, the testing machine 1 comprises a slewing ring 7 and a slewing ring support frame 71. The slewing ring 7 is rotatably supported by the slewing ring support frame 71 around the slip rotation axis S.

Preferably, the slewing ring 7 comprises a central cavity 75, suitable for being crossed by the vehicle wheel 4 when the vehicle wheel is placed in contact with the rotating drum 3. In other words, the slewing ring 7 is placed in the proximity and around the point of contact Q between the vehicle wheel 4 and the rotating drum 3.

Preferably, therefore, the slewing ring 7 rotates on a slewing ring plane parallel to or substantially coplanar with the plane that defines the access window 22.

Furthermore, preferably, the slewing ring 7 is arranged all around the access window 22.

The testing machine 1 comprises a carriage support 8 which supports the carriage 61 and which is constrained to the slewing ring 7 so as to be integral in rotation with the slewing ring 7. In this way, when the slewing ring is rotated around the slip rotation axis S, the entire wheel movement device 6 follows the rotation.

The slewing ring support frame 71 is rotatably supported by the base frame 2 around the camber rotation axis C. In this way, when the slewing ring support frame 71 is rotated around the camber rotation axis C, the entire wheel movement device 6 and the slewing ring 7 also follow the rotation.

Preferably, between the slewing ring 7 and the slewing ring support frame 71 and between the slewing ring support frame 71 and the base frame 2, ball bearings 72, 21 are provided.

Preferably, each rotation around the camber rotation axis C and around the slip rotation axis S is actuated by an independent actuator.

In particular, the testing machine 1 comprises a slewing ring movement actuator 73, for example a pneumatic or hydraulic cylinder, operatively connected to the slewing ring 7 to cause the rotation of the slewing ring 7, a carriage actuator 62, for example a pneumatic or hydraulic cylinder, operatively connected to the carriage 61 to cause the translation of the carriage 62 and a slewing ring support actuator, for example a pneumatic or hydraulic cylinder, operatively connected with the slewing ring support frame 71 to cause the rotation of the slewing ring support frame 71 around the camber rotation axis C.

In a particularly advantageous embodiment, the wheel movement device 6 is suspended, i.e. entirely suspended, with respect to the support surface P. In particular, the wheel movement device 6 is totally supported by the slewing ring 7, by means of the carriage support 8.

Preferably, as shown in the accompanying figures, the wheel movement device 6 is arranged entirely on one side of the slewing ring surface or in any case on one side of the surface which defines and passes through the access window 22. This allows compact size and simplicity of construction to be obtained.

In an embodiment variant, the wheel movement device 6 comprises a wheel protection device 9. Such a wheel protection device 9 may be moved from an open configuration A, in which the wheel protection device 9 allows access to the wheel movement device 6 for the insertion of a vehicle wheel 4, to a closed configuration CL, in which the wheel protection device 9 wraps the wheel 4. In this closed configuration CL, during the test (i.e. operation of the machine with the wheel in contact with the rotating drum 3, the wheel protection device 9 blocks any residual material or fumes coming from the wheel, so as to prevent the diffusion thereof in the surrounding environment. Furthermore, the wheel movement device is also capable of blocking an accidental release of the wheel from the carriage 61.

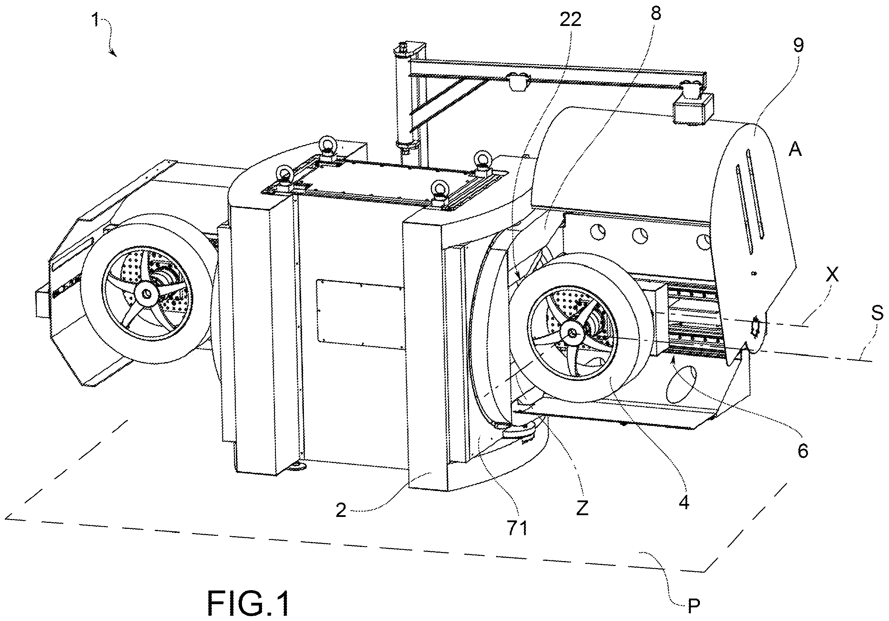

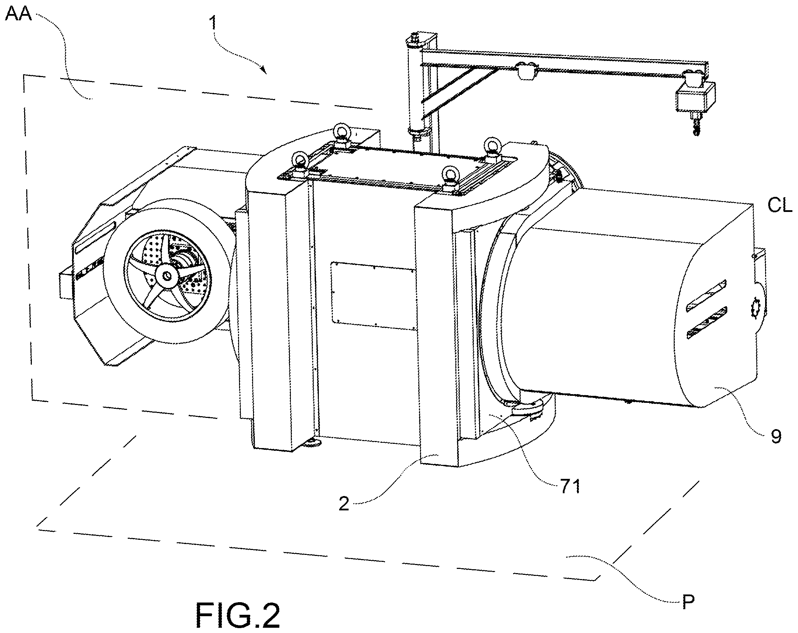

In a preferred embodiment, shown in figures 1 and 2, the wheel protection device 9 is a frame, rotatably constrained to the wheel movement device 6 around an axis parallel to the horizontal axis X, for moving the wheel protection device from the open configuration A to the closed configuration CL. Preferably, such a wheel protection device 9 is therefore a shell which wraps the wheel in a spaced manner.

Innovatively, the testing machine according to the present invention allows solving the drawbacks related to the prior art. In particular, the configuration of the testing machine according to the present invention allows decreasing the flexures and dynamic actions acting on the entire structure of the machine, allowing a lighter and at the same time more rigid machine to be obtained compared to the machines of the prior art.

Thanks to this, it is possible to simulate test dynamics at higher frequencies than the prior art, while keeping the testing machine with a simple structure and with a relatively limited use of resources.

Moreover, advantageously, the testing machine according to the present invention is more compact and less bulky.

In particular, by virtue of the presence of the slewing ring 7, located in the vicinity of the access window 22 and at the camber rotation axis C, the testing machine 1 is extremely compact in size compared to the dimensions of the machines of the prior art.

Furthermore, advantageously, the presence of a wheel protection device allows easily and effectively blocking any rubber residues and brake dust generated during the tests.

Furthermore, by virtue of the presence of a wheel movement device suspended with respect to the support surface, it is possible to have simple and effective access to the wheel, thus facilitating wheel change and cleaning operations.

## Claims

1. Testing machine (1) for a vehicle wheel (4) comprising:
- a base frame (2), suitable for resting on a support surface (P);
- a rotating drum (3) rotatably supported by the base frame around a drum axis (T);
- rotating drum actuating means (5), for the rotation of the rotating drum (3) around the drum axis (T);
- a wheel movement device (6), suitable for rotatably supporting the vehicle wheel (4) around a wheel axis (Z) and for moving the vehicle wheel (4) from a position spaced from the rotating drum (3) to a position in contact with the rotating drum (3);
wherein the wheel movement device (6) is rotatably supported by the base frame (2) around a slip rotation axis (S), said slip rotation axis (S) being incident or perpendicular to a plane (K) tangent to the contact point (Q) between the vehicle wheel (4) and the rotating drum (3) so that following a rotation of the wheel movement device (6) around the slip rotation axis (S), the vehicle wheel (4) is rotated according to a lateral slip angle (α) ;
wherein the wheel movement device (6) is rotatably supported by the base frame (2) around a camber rotation axis (C), said camber rotation axis (C) being perpendicular to the wheel axis (Z) and to the slip rotation axis (S), so that following a rotation of the wheel movement device (6) around the camber rotation axis (C), the vehicle wheel (4) is rotated according to a camber angle (β),
wherein the wheel movement device (6) comprises a carriage (61) suitable for rotatably supporting the vehicle wheel (4) around the wheel axis (Z), said carriage (61) being movable along a horizontal direction (X) parallel to the slip rotation axis (S);
said testing machine (1) further comprising:
a slewing ring (7) and a slewing ring support frame (71), wherein said slewing ring (7) is rotatably supported by the slewing ring support frame (71) around the slip rotation axis (S);
a carriage support (8) which supports the carriage (61) and which is constrained to the slewing ring (7) so as to be integral in rotation with the slewing ring (7);
**characterised in that**:
the slewing ring support frame (71) is rotatably supported by the base frame (2) around the camber rotation axis (C).

2. Testing machine (1) according to claim 1, wherein the slip rotation axis (S) and the camber rotation axis (C) are incident at the point of contact (Q) between the vehicle wheel (4) and the rotating drum (3).

3. Testing machine (1) according to any one of the preceding claims, wherein the slewing ring (7) is placed in the proximity and around the point of contact (Q) between the vehicle wheel (4) and the rotating drum (3).

4. Testing machine (1) according to any one of the preceding claims, wherein between the slewing ring (7) and the slewing ring support frame (71) and between the slewing ring support frame (71) and the base frame (2), ball bearings (72, 21) are provided.

5. Testing machine (1) according to claims 1 or 3, comprising a slewing ring movement actuator (73), for example a pneumatic or hydraulic cylinder, operatively connected to the slewing ring (7) to cause the rotation of the slewing ring (7), a carriage actuator (62), for example a pneumatic or hydraulic cylinder, operatively connected to the carriage (61) to cause the translation of the carriage (62) and a slewing ring support actuator, for example a pneumatic or hydraulic cylinder, operatively connected with the slewing ring support frame (71) to cause the rotation of the slewing ring support frame (71).

6. Testing machine (1) according to any one of claims 1 to 5, wherein the wheel movement device (6) is suspended with respect to the support surface (P).

7. Testing machine (1) according to claim 6, wherein the wheel movement device (6) is totally supported by the slewing ring (7), by means of the carriage support (8).

8. Testing machine (1) according to any one of the preceding claims, wherein the wheel movement device (6) comprises a wheel protection device (9), which may be moved from an open configuration (A), in which the wheel protection device (9) allows access to the wheel movement device (6) for the insertion of a vehicle wheel (4) to a closed configuration (CL), in which the wheel protection device (9) winds the wheel (4) in a way such that, during the test, the wheel protection device (9) blocks any residues of material or fumes coming from the wheel.

9. Testing machine (1) according to claim 8, wherein the wheel protection device (9) is a frame, rotatably constrained to the wheel movement device (6) around an axis parallel to the horizontal axis (X), for moving the wheel protection device from the open configuration (A) to the closed configuration (CL).

## Patentansprüche

1. Prüfmaschine (1) für ein Fahrzeugrad (4), umfassend:
- einen Grundrahmen (2), der geeignet ist, auf einer Auflagefläche bzw. - oberfläche (P) zu ruhen;
- eine Drehtrommel (3), die durch den Grundrahmen um eine Trommelachse (T) drehbar gelagert ist;
- Drehtrommel-Betätigungsmittel (5) für die Drehung der Drehtrommel (3) um die Trommelachse (T);
- eine Radbewegungsvorrichtung (6), die geeignet ist, das Fahrzeugrad (4) um eine Radachse (Z) drehbar zu lagern und das Fahrzeugrad (4) von einer von der Drehtrommel (3) beabstandeten Position zu einer Position in Kontakt mit der Drehtrommel (3) zu bewegen;
wobei die Radbewegungsvorrichtung (6) durch den Grundrahmen (2) um eine Schlupfdrehachse (S) drehbar gelagert ist, wobei die Schlupfdrehachse (S) auf eine Ebene (K), die den Kontaktpunkt (Q) zwischen dem Fahrzeugrad (4) und der Drehtrommel (3) tangiert, trifft oder senkrecht zu dieser verläuft, sodass auf eine Drehung der Radbewegungsvorrichtung (6) um die Schlupfdrehachse (S) folgend das Fahrzeugrad (4) gemäß einem seitlichen Schlupfwinkel (α) gedreht wird;
wobei die Radbewegungsvorrichtung (6) durch den Grundrahmen (2) um eine Sturzdrehachse (C) drehbar gelagert ist, wobei die Sturzdrehachse (C) senkrecht zu der Radachse (Z) und zu der Schlupfdrehachse (S) verläuft, sodass einer Drehung der Radbewegungsvorrichtung (6) um die Sturzdrehachse (C) folgend das Fahrzeugrad (4) gemäß einem Sturzwinkel (β) gedreht wird,
wobei die Radbewegungsvorrichtung (6) einen Schlitten (61) umfasst, der geeignet ist, das Fahrzeugrad (4) um die Radachse (Z) drehbar zu lagern, wobei der Schlitten (61) entlang einer horizontalen Richtung (X) parallel zu der Schlupfdrehachse (S) bewegbar ist;
wobei die Prüfmaschine (1) ferner umfasst:
einen Drehkranz (7) und einen Drehkranzlagerrahmen (71), wobei der Drehkranz (7) durch den Drehkranzlagerrahmen (71) um die Schlupfdrehachse (S) drehbar gelagert ist;
einen Schlittenträger (8), der den Schlitten (61) trägt und der an den Drehkranz (7) so gebunden ist, dass er mit dem Drehkranz (7) drehfest ist;
**dadurch gekennzeichnet, dass**:
der Drehkranzlagerrahmen (71) durch den Grundrahmen (2) um die Sturzdrehachse (C) drehbar gelagert ist.

2. Prüfmaschine (1) nach Anspruch 1, wobei die Schlupfdrehachse (S) und die Sturzdrehachse (C) an dem Kontaktpunkt (Q) zwischen dem Fahrzeugrad (4) und der Drehtrommel (3) aufeinandertreffen.

3. Prüfmaschine (1) nach einem der vorhergehenden Ansprüche, wobei der Drehkranz (7) in der Nähe des Kontaktpunkts (Q) zwischen dem Fahrzeugrad (4) und der Drehtrommel (3) und um diesen herum platziert ist.

4. Prüfmaschine (1) nach einem der vorhergehenden Ansprüche, wobei zwischen dem Drehkranz (7) und dem Drehkranzlagerrahmen (71) sowie zwischen dem Drehkranzlagerrahmen (71) und dem Grundrahmen (2) Kugellager (72, 21) bereitgestellt sind.

5. Prüfmaschine (1) nach Anspruch 1 oder 3, umfassend einen Drehkranzbewegungsaktuator (73), zum Beispiel einen Pneumatik- oder Hydraulikzylinder, der mit dem Drehkranz (7) wirkverbunden ist, um die Drehung des Drehkranzes (7) zu bewirken, einen Schlittenaktuator (62), zum Beispiel einen Pneumatik- oder Hydraulikzylinder, der mit dem Schlitten (61) wirkverbunden ist, um die Translation des Schlittens (62) zu bewirken, und einen Drehkranzlageraktuator, zum Beispiel einen Pneumatik- oder Hydraulikzylinder, der mit dem Drehkranzlagerrahmen (71) wirkverbunden ist, um die Drehung des Drehkranzlagerrahmens (71) zu bewirken.

6. Prüfmaschine (1) nach einem der Ansprüche 1 bis 5, wobei die Radbewegungsvorrichtung (6) in Bezug auf die Auflagefläche (P) aufgehängt ist.

7. Prüfmaschine (1) nach Anspruch 6, wobei die Radbewegungsvorrichtung (6) mittels des Schlittenträgers (8) vollständig durch den Drehkranz (7) getragen wird.

8. Prüfmaschine (1) nach einem der vorhergehenden Ansprüche, wobei die Radbewegungsvorrichtung (6) eine Radschutzvorrichtung (9) umfasst, die von einer offenen Konfiguration (A), in der die Radschutzvorrichtung (9) den Zugang zu der Radbewegungsvorrichtung (6) für das Einsetzen eines Fahrzeugrads (4) ermöglicht, in eine geschlossene Konfiguration (CL) bewegt werden kann, in der die Radschutzvorrichtung (9) das Rad (4) derart aufwickelt, dass die Radschutzvorrichtung (9) während der Prüfung alle von dem Rad kommenden Materialreste oder Dämpfe blockiert.

9. Prüfmaschine (1) nach Anspruch 8, wobei die Radschutzvorrichtung (9) ein Rahmen ist, der an die Radbewegungsvorrichtung (6) um eine Achse parallel zu der horizontalen Achse (X) drehbar gebunden ist, um die Radschutzvorrichtung von der offenen Konfiguration (A) in die geschlossene Konfiguration (CL) zu bewegen.

## Revendications

1. Machine d'essai (1) pour une roue de véhicule (4) comprenant :
- un cadre de base (2), convenant pour reposer sur une surface de support (P) ;
- un tambour rotatif (3) supporté avec faculté de rotation par le cadre de base autour d'un axe de tambour (T) ;
- des moyens d'actionnement de tambour rotatif (5), pour la rotation du tambour rotatif (3) autour de l'axe de tambour (T) ;
- un dispositif de mouvement de roue (6), convenant pour supporter avec faculté de rotation la roue de véhicule (4) autour d'un axe de roue (Z) et pour déplacer la roue de véhicule (4) d'une position espacée du tambour rotatif (3) à une position en contact avec le tambour rotatif (3) ;
dans laquelle le dispositif de mouvement de roue (6) est supporté avec faculté de rotation par le cadre de base (2) autour d'un axe de rotation par glissement (S), ledit axe de rotation par glissement (S) étant incident ou perpendiculaire à un plan (K) tangent au point de contact (Q) entre la roue de véhicule (4) et le tambour rotatif (3), de sorte qu'à la suite d'une rotation du dispositif de mouvement de roue (6) autour de l'axe de rotation par glissement (S), la roue de véhicule (4) est mise en rotation selon un angle de glissement latéral (α) ;
dans laquelle le dispositif de mouvement de roue (6) est supporté avec faculté de rotation par le cadre de base (2) autour d'un axe de rotation de carrossage (C), ledit axe de rotation de carrossage (C) étant perpendiculaire à l'axe de roue (Z) et à l'axe de rotation par glissement (S), de sorte qu'à la suite d'une rotation du dispositif de mouvement de roue (6) autour de l'axe de rotation de carrossage (C), la roue de véhicule (4) est mise en rotation selon un angle de carrossage ( β),
dans laquelle le dispositif de mouvement de roue (6) comprend un chariot (61) convenant pour supporter avec faculté de rotation la roue de véhicule (4) autour de l'axe de roue (Z), ledit chariot (61) étant mobile le long d'une direction horizontale (X) parallèle à l'axe de rotation par glissement (S),
ladite machine d'essai (1) comprenant en outre :
une couronne d'orientation (7) et un cadre de support de couronne d'orientation (71), dans laquelle ladite couronne d'orientation (7) est supportée avec faculté de rotation par le cadre de support de couronne d'orientation (71) autour de l'axe de rotation par glissement (S) ;
un support de chariot (8) qui supporte le chariot (61) et qui est contraint à la couronne d'orientation (7) de façon à être solidaire en rotation de la couronne d'orientation (7) ;
**caractérisée en ce que** :
le cadre de support de couronne d'orientation (71) est supporté avec faculté de rotation par le cadre de base (2) autour de l'axe de rotation de carrossage (C).

2. Machine d'essai (1) selon la revendication 1, dans laquelle l'axe de rotation par glissement (S) et l'axe de rotation de carrossage (C) sont incidents au point de contact (Q) entre la roue de véhicule (4) et le tambour rotatif (3).

3. Machine d'essai (1) selon l'une quelconque des revendications précédentes, dans laquelle la couronne d'orientation (7) est placée à proximité et autour du point de contact (Q) entre la roue de véhicule (4) et le tambour rotatif (3).

4. Machine d'essai (1) selon l'une quelconque des revendications précédentes, dans laquelle entre la couronne d'orientation (7) et le cadre de support de couronne d'orientation (71) et entre le cadre de support de couronne d'orientation (71) et le cadre de base (2), des roulements à billes (72, 21) sont prévus.

5. Machine d'essai (1) selon les revendications 1 ou 3, comprenant un actionneur de mouvement de couronne d'orientation (73), par exemple un vérin pneumatique ou hydraulique, relié opérationnellement à la couronne d'orientation (7) pour provoquer la rotation de la couronne d'orientation (7), un actionneur de chariot (62), par exemple un vérin pneumatique ou hydraulique, relié opérationnellement au chariot (61) pour provoquer la translation du chariot (62) et un actionneur de support de couronne d'orientation, par exemple un vérin pneumatique ou hydraulique, relié opérationnellement au cadre de support de couronne d'orientation (71) pour provoquer la rotation du cadre de support de couronne d'orientation (71).

6. Machine d'essai (1) selon l'une quelconque des revendications 1 à 5, dans laquelle le dispositif de mouvement de roue (6) est suspendu par rapport à la surface de support (P).

7. Machine d'essai (1) selon la revendication 6, dans laquelle le dispositif de mouvement de roue (6) est totalement supporté par la couronne d'orientation (7), au moyen du support de chariot (8).

8. Machine d'essai (1) selon l'une quelconque des revendications précédentes, dans laquelle le dispositif de mouvement de roue (6) comprend un dispositif de protection de roue (9), qui peut être déplacé d'une configuration ouverte (A), dans laquelle le dispositif de protection de roue (9) permet l'accès au dispositif de mouvement de roue (6) pour l'insertion d'une roue de véhicule (4), à une configuration fermée (CL), dans laquelle le dispositif de protection de roue (9) enroule la roue (4) de telle sorte que, pendant l'essai, le dispositif de protection de roue (9) bloque tout résidu de matériau ou de fumées provenant de la roue.

9. Machine d'essai (1) selon la revendication 8, dans laquelle le dispositif de protection de roue (9) est un cadre, contraint avec faculté de rotation au dispositif de mouvement de roue (6) autour d'un axe parallèle à l'axe horizontal (X), pour déplacer le dispositif de protection de roue de la configuration ouverte (A) à la configuration fermée (CL).
